# EUROPEAN PATENT APPLICATION

(11) **EP 3 667 184 A1**
(43) Date of publication of application: **17.06.2020**
(21) Application number: 19215180.1
(22) Date of filing: 11.12.2019
(51) Int. Cl.: F24D 19/10, F23N 1/08, F24H 9/20, G05D 23/19

(54) **BOILER CONTROL SYSTEM AND METHOD**

(30) Priority: 11.12.2018 GB 201820146
(71) Applicant: Domestic Energy Products Ltd, Romney Marsh, Kent TN29 0HF (GB)
(72) Inventor: COPE, Derek, Kent, TN29 0HF (GB)
(74) Representative: Elkington and Fife LLP

(57) **Abstract**

A boiler control system is based on delayed cycle control, in which the control is implemented by interrupting a heating device enable signal (such as a BMS enable signal). This means the system can be used with electronic boilers without the boiler being aware (in terms of generating error codes) of the control taking place. The system further includes a drive signal detection means to detect supply of a drive signal to the boiler burner. This allows activation and deactivation of the burner to be directly sensed, enabling more accurate determination of the upper and lower temperature thresholds of the internal thermostat.

## Description

The invention relates in general to control of temperature controlled heating processes, in particular heating boilers. More specifically, the invention relates to a boiler control unit which includes a delayed cycle controller.

Heating boilers (oil or gas) for heating the rooms of a building and/or for providing tap hot water are usually controlled by a thermal relay which provides an on/off temperature control. Such boilers are typically dimensioned in such a way that they are able to manage conditions in which an extremely high heating demand exists, i.e. during the coldest winter days. This means that the capacity of the heating boiler is utilised to the greatest extent during the cold periods of the year. During the remaining parts of the year, the boilers are over-dimensioned, and consequently, the overall efficiency is not optimal.

A solution to the above problem is presented in WO94/02787, which discloses a delayed cycle control unit for a heating boiler equipped with an on-off controllable burner. The use of such a control unit results in an improved overall energy efficiency, particularly in periods with low loads, i.e. during moderate and warm seasons. The boiler is provided with a thermal relay, which provides a temperature responsive signal which is switched on when the temperature in the boiler underpasses a lower temperature level and switched off when the temperature in the boiler exceeds a higher temperature level.

When the high temperature limit is reached, the burner is switched off, as also would be the case if the thermal relay controlled the burner directly. However, when the low temperature limit is reached, the burner is not switched on immediately, as would be the case if the thermal relay controlled the burner directly. Instead, the control unit is arranged to measure the cooling time of the boiler, by measuring the time that has elapsed between the on-to-off transition and the off-to-on transition of the signal provided by the thermal relay. The control unit is further arranged to add a certain percentage to this cooling time, resulting in a time delay, and to switch on the burner when this time delay has elapsed.

The system interfaces with an external computer so that parameters such as the additional cooling time delay percentage may be set. This system provides an improved energy efficiency. However, the additional cooling time delay percentage is a static quantity, which must be preset by an operator.

An improvement is disclosed in WO2006/036064, in which the delay is dynamically adjusted based on changes in the temperature of the boiler outlet. Essentially, if the temperature drop during the extended cooling period is small (based on a measure which is linked to the temperature drop during the normal cycling function), the extended cooling period is increased in duration (by increasing the delay percentage value). If the temperature drop during the extended cooling period is large (again based on a measure which is linked to the temperature drop during the normal cycling function), the extended cooling period is reduced in duration (by decreasing the delay percentage value).

A first problem with these known systems is the complexity of the algorithm for dynamic control.

A second problem is that the system cannot be fitted to certain types of boiler, in particular having fully electronic control. In such boilers, a discrepancy between the boiler firing command generated by the thermostat and the actual firing of the burner will be detected and can lead to a system shut down. Thus, it becomes difficult to implement the override control of the burner.

A further improvement is disclosed in GB2514554B, in which the system comprises an interrupt unit arranged to interrupt a heating device enable signal thereby to implement the cooling cycle control. The heating device enable signal comprises a building management system (BMS) burner enable signal. This is an auxiliary external control signal which many electronic boilers are configured to be responsive to. It allows the boiler internal controls to be overridden by the BMS. By interrupting this signal, activation and deactivation of the burner can be controlled by the provided control system without triggering errors.

The improvement allows the delayed cycle control to be implemented without interfering with any of the internal wiring of the boiler. To extend the cooling cycle, the initial cooling cycle implemented by the boiler needs to be measured. In particular, the upper and lower temperature thresholds which trigger start and end of the cooling cycle need to be ascertained.

To do this, the system uses its own temperature sensor to measure temperature variation in outgoing water from the boiler. The internal upper temperature threshold of the thermostat is assumed to be the peak temperature that is reached by the water, and the internal lower temperature threshold is assumed to be the minimum temperature that is reached. The cooling cycle time is calculated as the time elapsed between these two temperature points.

However, this can lead to inaccuracy in calculation of the initial cooling cycle period because there is in fact a time delay between the moment of deactivation of the burner and subsequent representation of this in the temperature of the water. This is because absorbed heat in pipes and building materials to some extent insulates the water, meaning it does not cool immediately. Hence the known system underestimates the true length, and start and end points of the initial cooling cycle, leading to inaccurate setting of the extended cooling cycle, and lower efficiency saving than could otherwise be achieved.

There is needed an improved system capable of more accurately measuring internal upper and lower temperature thresholds of a boiler cooling cycle.

The invention is defined by the claims.

According to the invention, there is provided a boiler control system for controlling a heating device in a boiler, comprising:
a delayed cycle controller for activating and deactivating said heating device based on an upper temperature threshold and a lower temperature threshold;
a temperature sensor for measuring a boiler temperature;
a drive signal detection means for detecting supply of a drive signal to the heating device;
an interrupt unit for interrupting a heating device enable signal thereby to implement the delayed cycle control of the delayed cycle controller, wherein
the delayed cycle controller is adapted to configure the delayed cycle control based on temperature measurements and an output of the drive signal detection means.

As in the known system, this system provides duty cycle control by interrupting an enable signal. This means that the normal thermostatic boiler control does not need to be altered, so that the system can be used with electronic boilers without generating errors. In particular, the heating device enable signal is one which takes priority of the internal boiler thermostatic control of the burner. The heating device enable signal may be a building management system burner enable signal.

In addition to the temperature sensor, the system of the invention includes a drive signal detection means for detecting supply of a drive signal to the heating device of the boiler (i.e. the burner). The drive signal is separate to the enable signal and is an internal drive signal for the heating device. It may simply be a power supply to the heating device. For example it may be a power supply to a gas valve of the heating device (the burner). For example, when the drive signal is active, the burner is on, when the drive signal is inactive, the burner is off.

By detecting supply of the drive signal with the detection means, activation and deactivation of the heating device (burner) can be directly ascertained without any time delay. In particular, transition of the drive signal from inactive (off) to active (on) may indicate activation of the burner. The temperature at which this occurs may be identified as the internal lower temperature limit. Transition of the drive signal from active (on) to inactive (off) may indicate deactivation of the burner. The temperature at which this occurs may be identified as the internal upper temperature limit.

Hence, the upper and lower temperature thresholds may be ascertained directly and hence with greater accuracy. This improves determination of the extended cooling cycle, and thereby enables greater improvements in energy efficiency. Over a 50 cycle test routine, it was found that up 3% more fuel saving could be achieved; a total fuel saving of 18% being achieved.

In accordance with one or more examples, the drive signal detection means may comprise a signal sensing element for sensing the drive signal in a drive signal supply line. The signal sensing element may be for electrically or magnetically coupling with the drive signal to sense the drive signal. It may sense presence of the drive signal and/or it may sense magnitude of the drive signal. It may be for sensing a temporal pattern or waveform of the drive signal.

It may in examples comprise a component for mounting in proximity to a drive signal supply line, for instance on or around the supply line, having means for electrically or magnetically coupling with the drive signal (when it is present).

The signal sensing element may in examples comprise an electrical connector for connection to a input terminal of the heating device or for connection to a terminal of a drive signal supply line. The signal sensing element may simply be a wire for electrically piggybacking on the electrical connection point between the drive signal supply line and the heating device.

In alternative examples, the signal sensing element may comprise an inductive sensor for inductively coupling with the drive signal. The inductive sensor may for instance comprise an annular inductive loop for fitting around the drive signal supply line. It may be clippable around the drive signal line.

The drive signal detection means may in further examples comprise a signal sensing element for sensing a control signal for controlling supply of the drive signal to the heating device. For instance the control signal may be a low voltage control signal of a relay. The control signal may be a thermostat control signal.

In any examples, the drive signal detection means may be for detecting a temporal pattern or waveform of the drive signal.

The delayed cycle controller may be adapted to process a signal output of the drive signal detection means to identify a drive signal temporal pattern or waveform.

As discussed above, the delayed cycle control may be configured based on a detected activation of the drive signal and/or a detected deactivation of the drive signal. Activation may mean transition of the drive signal from inactive (off) to active (on). Deactivation may mean transition of the drive signal from active (on) to inactive (off).

The delayed cycle controller may be adapted to set one or both of the temperature thresholds based on temperature measurements taken at times determined based on detection of the drive signal.

The temperature measurements may be in particular be taken at times corresponding to detected activation and/or deactivation of the drive signal. As explained above, activation and deactivation of the drive signal may correspond to activation and deactivation respectively of the burner. Sensing the temperature at each of these times hence gives an accurate indication of internal lower and upper temperature limits (e.g. lower and upper temperature limits of a thermostatic control).

The drive signal may be a power supply to the heating device. Hence, the detection means in this case may be for detecting supply of power to the device. For example, the drive signal may be a power supply to a gas valve of the heating device (the burner). For example, when the drive signal is on, the gas valve may be open and so the heating device (burner) is on, and when the drive signal is off, the gas valve may be closed, so the heating device is off. These represent examples only.

The interrupt unit may comprise a relay switch.

By interrupting the enable signal, the deactivation function is provided. By allowing the enable signal to pass, the activation function is provided (and only when the enable signal is in any case high). The enable signal is used cycle-by-cycle, whereas it normally would be used with a slower frequency of change.

As discussed, the delayed cycle controller can be adapted to set at least the lower temperature threshold based on temperature measurements. This provides dynamic control of the lower temperature threshold.

The invention also provides a method of controlling a boiler heating device, comprising:
sensing a boiler temperature;
detecting supply of a drive signal to the boiler heating device;
activating and deactivating said heating device based on an upper temperature threshold and a lower temperature threshold to provide delayed cycle control, wherein the upper temperature threshold and lower temperature thresholds are below internal upper and lower thermostat control settings of the boiler, such that the internal upper thermostat control setting is not reached;
interrupting a heating device enable signal thereby to implement the delayed cycle control, wherein
the delayed cycle control is configured based on temperature measurements and on the detection of supply of the drive signal.

The heating device enable signal may be a building management system burner enable signal.

This method may set the temperature thresholds used during the delayed cycle control (the "upper and lower temperature thresholds") to be below the internal settings used during the delayed cycle control (the "internal upper and lower temperature thresholds"). This means the thermostatic switching is inhibited because the delayed cycle control settings are used first.

A calibration operation can be used to determine the upper and/or lower temperature threshold. In particular, the upper temperature threshold may be set to the internal upper threshold of the boiler in its original setup. The original thresholds will be termed "pre-calibration" internal temperature thresholds, or pre-calibration thermostat control settings.

The calibration operation may comprise measuring a cooling time between pre-calibration internal upper and lower temperature thresholds (thermostat control settings). This cooling time value may be used to determine when to take temperature measurements for implementing dynamic control of the lower temperature threshold. It also allows initial calculation of the extended cooling period, e.g. by adding on a given percentage of the initial measured cooling period.

The internal upper and/or lower temperature thresholds may be respectively identified based on sensing the boiler temperature at a time corresponding to detected deactivation of the drive signal and/or detected activation of the drive signal.

The upper temperature threshold may be set equal to the pre-calibration internal upper temperature threshold, and, after the calibration, the internal upper temperature threshold increased. In this way, the function of the internal thermostat is effectively disabled.

After the calibration, the internal pre-calibration lower temperature threshold may also be increased. This means that the internal thermostatic control will always be demanding a burning function as soon as the enable signal is allowed by the delayed cooling cycle control.

By increasing the boiler thermostat control settings, when the system of the invention takes over control of the burner (and cycles it at the original desired temperature setting) the boiler control system is ensured to reach the temperature at which the system of the invention takes control. By emulating a non-enable signal to the burner, the cooling period can be started even though the internal boiler thermistor did not reach its own target temperature.

The system thus disables the burner at a set temperature (such as 1, 2 or 3 degrees) below the maximum boiler thermostat set point, and allows the cooling cycle to begin.

In other examples, the upper temperature threshold may be set below the pre-calibration internal upper temperature threshold, and preferably wherein the lower temperature threshold is set below the pre-calibration internal lower temperature threshold. This achieves a similar effect, in that the system thresholds are configured so that the internal upper and lower temperature thresholds are slightly higher than the system internal upper and lower temperature thresholds.

The upper and lower temperature thresholds may be set such that a cooling time between the upper and lower thresholds is greater than the measured pre-calibration cooling time between the pre-calibration upper and lower temperature thresholds.

The lower temperature threshold may be controlled dynamically. For example, it may be set to one of a fixed set of temperatures. One of the fixed set of temperatures may for instance be equal to the pre-calibration lower thermostat control setting. The others may be at values below the pre-calibration lower temperature threshold for instance.

The lower temperature threshold may for example selected based on a temperature measurement at a fixed point in time after the upper temperature threshold is reached.

An example of the invention will now be described with reference to the accompanying drawings, in which:
Figure 1 shows a known boiler control unit;
Figure 2 shows a timing diagram to explain the operation of the known unit as well as the operation of the control unit of the invention;
Figure 3 shows a further known boiler control unit in schematic form;
Figure 4 shows an example of the further known boiler control of the in more detail; and
Figure 5 shows timing diagrams to explain known methods for configuring delayed cycle control;
Figure 6 shows further timing further diagrams to explain known methods;
Figure 7 shows a boiler control system according to the invention; and
Figure 8 shows timing diagrams to explain a control method according to the invention.

The invention provides a boiler control system based on delayed cycle control, in which the control is implemented by interrupting a heating device enable signal, for example in the form of a building management system (BMS) enable signal. This means the system can be used with electronic boilers without the boiler being aware (in terms of generating error codes) of the control taking place. The invention includes a drive signal detection means to detect supply of a drive signal, for example a power signal or supply, to the heating device.

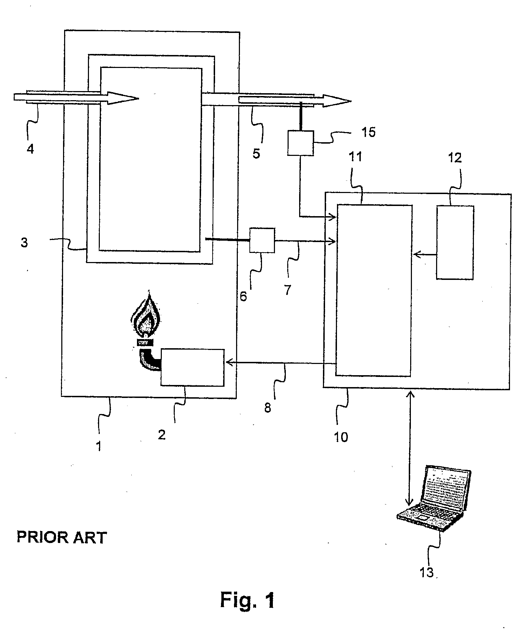

Figure 1 shows a known heating boiler 1 controlled by a control unit 10.

The boiler 1 comprises a water tank 3, an inlet conduit 4, an outlet conduit 5, and a burner 2 controlled in an on-off manner by a delayed cycle controller 11 in the control unit 10. A thermal relay 6 provides a temperature responsive signal 7 which is switched on when the temperature in the boiler underpasses a lower temperature level. The signal 7 is further switched off when the temperature in the boiler exceeds a higher temperature level.

The delayed cycle controller 11 is further arranged to produce a control signal 8 for input to the burner 2, in order to switch the burner 2 on and off as a function of the thermal relay signal and the time. More specifically, the control signal is switched off immediately when the thermal relay signal 7 is switched off, and the control signal is switched on at a delayed point of time after the thermal relay signal 7 is switched on.

In this known system, the delay is calculated by the controller 11 as a certain percentage of the boiler's cooling time, i.e. the time elapsed from the on-off transition to the off- on transition of the signal 7 provided by the thermal relay 6. The control unit 10 is further adapted to communicate with an external computer 13.

A temperature sensor 15 is arranged to measure the temperature of the tap hot water in the outlet 5 from the tank 3.

The basic controller 11 with no delayed cycle control is arranged to compare the temperature measured with the temperature sensor 15 with a preset lower temperature level, and to start the burner if the measured temperature becomes lower than the lower temperature level.

The known delayed cycle controller adds a time period after the time when the temperature becomes lower than the lower temperature level. In a first known example, a cooling time delay percentage is stored as a fixed value, so that the cooling time is extended by a given fraction. In a second known example, the percentage value is dynamically controlled, and an algorithm for this purpose is shown as 12.

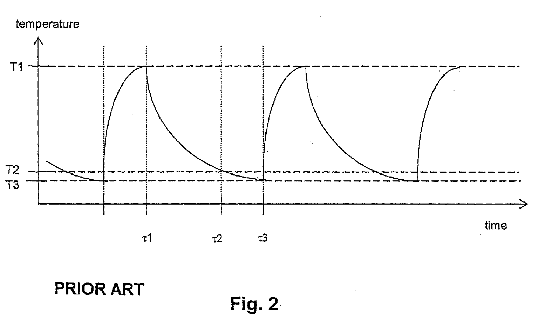

Figure 2 is a graph illustrating the boiler temperature as a function of time, in order to illustrate the operation of the delayed cycle controller.

At time 0 the burner is fired.

At time τ1 the signal 7 provided by the thermal relay 6 is switched off, and the controller 11 switches off the burner 2. The cooling time of the thermal relay is measured by the controller 11 as the period τ2- τ1.

At τ2, the signal 7 provided by the thermal relay 6 is switched on. Without delayed control, the burner would then be turned on.

However, the delayed cycle controller 11 does not start the burner immediately, at time τ2, but delays the start until the time τ3. The delay τ3- τ2 is calculated by the controller 11 as the stored delay percentage of the measured cooling time τ2- τ1.

As shown, the extended cooling time gives rise to cooling beyond the original lower threshold temperature of T2 to temperature T3.

By way of example, the duration of time 0 - τ1 may be of the order of 5 minutes, and the duration of time τ1 to τ2 may be of the order of 10 minutes.

The known system makes use of the existing temperature sensor 15 which forms part of the original boiler equipment. However, for some boiler types, for example with electronic control systems, it is not possible to use this signal in the manner previously proposed, since it can result in a shut down of the boiler based on a mismatch between the burner signal generated by the thermostatic control and the actual burner performance.

A system according to a known development (herein referred to as the "second known system") provides a delayed cycle control which does not require alteration to any of the original boiler equipment. This means that the electronic control system can be made to be essentially unaware of the presence of the delayed cycle control system of the development.

In commercial boiler systems, a building management system provides an enable signal for control of the boiler, which essentially functions as an override signal. The building management system ("BMS") is used to control systems within a building which contribute to the building's energy usage, and this can include heating, lighting and ventilation control. The BMS can also provide access control and other security systems such as closed-circuit television (CCTV) and motion detectors. Fire alarm systems and elevators are also sometimes linked to a BMS, for monitoring.

The heating control provided by BMS is typically implemented as an enable signal provided to the boiler. This enable signal is a command sent to the burner instructing it to fire in accordance with the thermostatic control, and a non-enable signal overrides the thermostatic control. By withholding the enable signal, the BMS can prevent burner operation when it detects that such burner operation is not needed.

The second known system makes use of this enable signal as a means for providing delayed cycle control. In particular, the second known system takes control of the burner "enable" signal, which is provided to the boiler from the building management system (BMS).

The system of the present invention also makes use of an interruption unit for interrupting a burner enable signal in order to implement delayed cycle control. To illustrate and explain this functionality, features of the second known system will now be described in detail. These features may be utilised in the present invention to provide the same interrupt functionality. A detailed example of the present invention will be described subsequently.

Electronic boilers are designed to follow the instructions of the BMS in preference to the thermostat cycles. Thus, by generating a BMS signal to turn off the burner or delay the burner turning on, the system can function with all types of boiler without generating errors.

The second known system is based on a microprocessor controlled self-setting thermostat for boilers. The system overrides the boiler internal thermostat and controls the boiler burning cycles without interfering with any of the boiler's internal electrical or mechanical equipment.

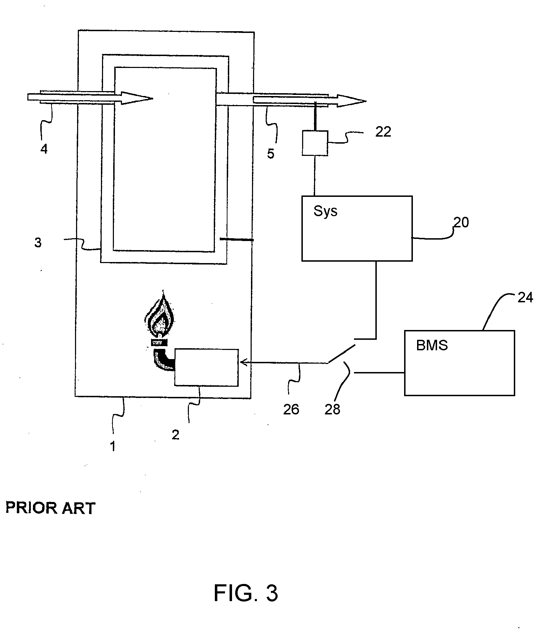

Figure 3 shows an example of the second known system in schematic form.

The system 20 is independent of the boiler 1 and does not rely on signals from any internal boiler components. Instead, a flow temperature sensor 22 is part of the system.

The boiler is controlled by a building management system 24 which provides a burner enable signal 26.

The system 20 overrides this, and this is represented schematically by the switch 28 which allows the burner control signal output by the system 20 to replace the BMS enable signal.

In one implementation, the system is implemented using a remote monitoring system which can be fitted to a consumer unit. This can provide wireless GPRS (email) messages relating to the operation of the system.

For example, fuel saving tests can be carried out by disabling the operation of the system and comparing fuel consumption statistics. These can be collected from communication with a pulse counting smart meter.

The system needs an initial calibration. In particular, the system needs to be able to switch off the burner at the end of the burner cycle, instead of the boiler's internal thermostatic control. To enable this, when the system is fitted, it performs a monitoring function, during which the maximum and minimum temperatures provided by the normal boiler thermostatic control (i.e. T1 and T2 in Figure 2) are monitored. At the limit, only one burner cycle is needed for this monitoring, but two or three cycles may be followed as the initial calibration.

This initial calibration typically takes place when the boiler starts from cold (or with a water temperature below 30 degrees).

The system monitors the boiler's outgoing water temperature using its own thermistor which is piggybacked next to the internal boiler thermistor. It also monitors the return water temperature to the boiler.

In a first possible implementation of second known system, to enable the burn cycle to be ended at the same temperature (T1 in Figure 2), the thermostat setting of the boiler is increased by the installer after the initial calibration, so that the second known system then takes charge of ending the burner cycles. An alternative second implementation is for the system temperatures to choose a small step below the monitored boiler settings. This implementation can also be used in the present invention.

By using the BMS "enable" signal, the system also takes charge of the timing of starting the burner cycles, as described below.

For the first implementation, to fit the system, the boiler's internal thermostat settings can be raised by a fixed amount after the initial calibration, such as 3°C (for both the upper and lower switching thresholds), to enable the compensation system to be implemented.

The maximum temperature as implemented by the compensation system is set this same 3°C lower than the new boiler internal setting, so that the original maximum temperature setting is preserved. In this way, at the desired maximum temperature, the control of the switching off of the boiler can be implemented by the system instead of by the internal boiler control.

As mentioned above, earlier delayed cycle controllers are known. The second known system with interrupt unit can be applied to an earlier known system using a known delayed cycle controller, by providing additional components which take control of the BMS enable signal. Instead, the system can be implemented as a single self-contained unit.

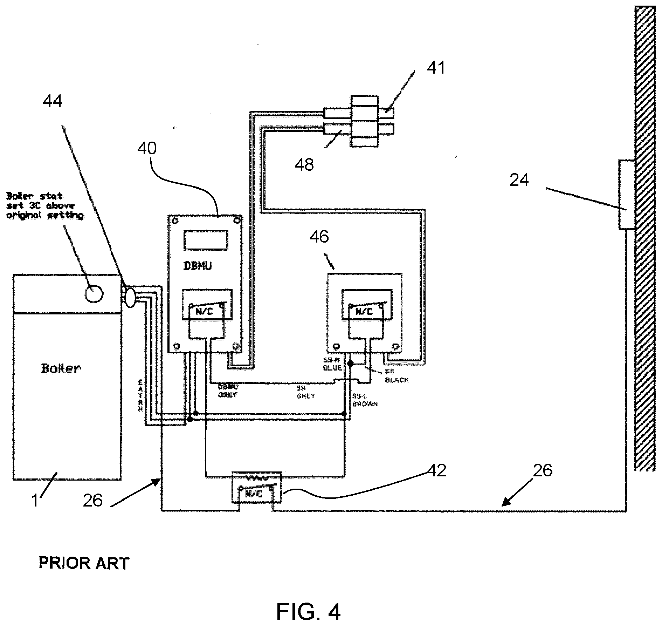

Figure 4 shows how the second known system with interrupt unit can be implemented in a way which makes use of an previous existing delayed cycle controller 40. This controller is associated with a temperature sensor 41 at the boiler output.

The BMS 24 provides its enable signal 26. This is interrupted by a zero contact relay 42. The enable signal is a low voltage signal, whereas the relay is controlled by a mains signal. The mains lines are shown as 44 between the boiler 1, the controller 40 and also the sensor unit 46 which forms part of the added components of the second known system.

The sensor unit 46 carries out the monitoring during the initial calibration described above. It is linked to a temperature sensor 48 at the boiler output.

The switch remains closed during the calibration so that the enable signal is not interrupted, and the boiler monitoring takes place. After the initial calibration, the sensor 46 provides control of the enable signal, thereby controlling when burning stops (because the boiler thermostat temperature has not yet been reached) and also controls when the burning starts again (because the raised boiler lower thermostat setting will have been passed).

The known use of the controller 40 would provide an interrupt signal to the burner of the boiler. In the arrangement of Figure 4, this burner interrupt signal is no longer coupled to the boiler. Instead, it is used to control the passage of the BMS enable signal to the boiler.

This arrangement essentially has two switches in series; the switch of the controller 40 and the switch of the sensor 46. During the initial calibration, the sensor 46 causes the normal internal boiler function to be followed, because the sensor 46 prevents any interruption of the enable signal. It is open so that the relay switch is not activated to open the relay switch (which is normally closed).

During the subsequent control, the sensor 46 allows the output of the controller 40 to be used to control the relay 42 and thereby implement the delayed cooling cycle.

In an integrated system, there is of course no need for separate switches, and the full functionality can be integrated into a single unit.

The second known system also provides a new approach to the way of controlling the extended cooling cycle. As explained above, the known method involves setting a target time duration for the extended cooling cycle.

The second known system can instead provide an approach based on temperature settings. This provides a more stable approach, which is less prone to instable variations. The dynamic control of the boiler burn and cool cycles is made simpler, and in particular requires no measuring of time delays. Furthermore, by using temperature measurement as the control parameter, it can be ensured that desired temperature levels are not exceeded, for example a minimum hot water temperature (which may be set for hygiene reasons).

As shown in Figure 2, the effect of extending the cooling period is to lower the temperature at the end of the cooling cycle.

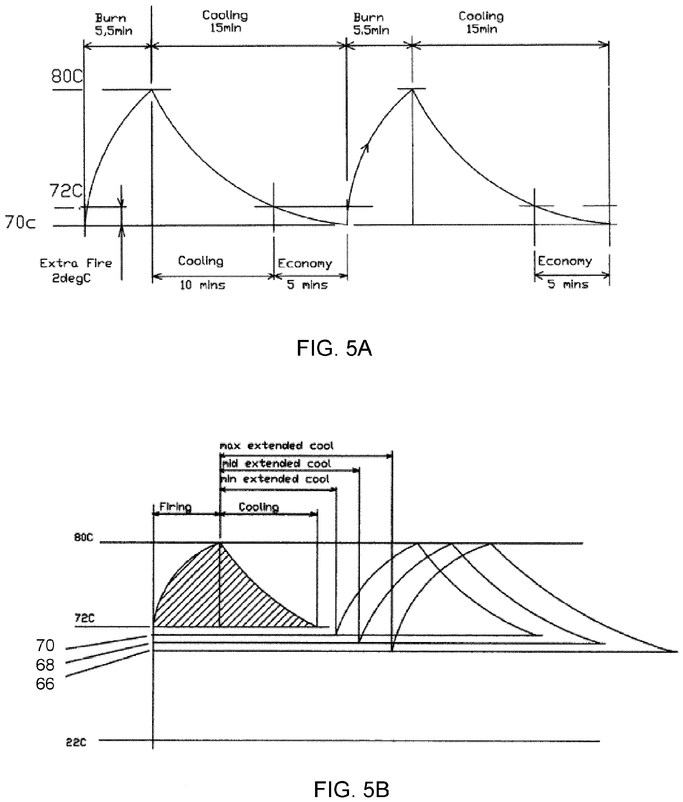

Figure 5A shows typical values. The boiler thermostat temperature settings (before the settings are changed after the calibration) are at 72 degrees (lower threshold) and 80 degrees (upper threshold). The burn cycle last 5.5 minutes in this example, and the normal cooling cycle lasts 10 minutes.

The second known system provides a set of extended temperature thresholds, such as 2, 4 and 6 degrees below the minimum temperature. Figure 5A shows the system set to the first extended threshold of 70 degrees, As shown, this results in an extended cooling period by an additional 5 minutes. The efficiency cycle carried out by the system of the invention is based on temperature detection rather than time monitoring as in the known approaches.

The minimum temperature is reduced by the fixed amount (such as 2 degrees below the starting point). Only when this reduced temperature is detected is the signal provided to fire the boiler, again by allowing the BMS enable command to be activated.

To determine if this level of extension of the cooling period is possible, or if a different extension should be set, the temperature is monitored over time. For example, the temperature is monitored periodically, for example every 4 seconds.

A fixed time period beyond the normal cooling time (i.e. τ1 to τ2; 10 minutes in this example) is allowed. The normal cooling time τ1 to τ2 is measured in the calibration phase.

If the temperature is maintained above this lower threshold for all of the additional time period, and for a set number of burn cycles (such as 5), this indicates that the temperature can be reduced further because the demand from the building is not large enough to need more rapid burn cycles.

For example, if cooling for a period of 15% longer than the normal cooling time can be allowed without the lower temperature being reached, the cooling period can be extended further by lowering the temperature threshold by a further 2 degrees. A longer cooling period is associated with the lower temperature threshold.

The firing time to raise the water to the upper temperature switching point will increase as a result, but this increase in firing time is relatively short compared to the increase in time of the cooling period, so that overall efficiency gains are obtained.

There is a fixed set of temperature adjustments, for example 2, 4 and 6 degrees below the lower temperature threshold. These have associated cooling period extensions at which the temperature is analysed to determine if the threshold needs to be changed. By way of example, the 2, 4 and 6 degree thresholds can be associated with 20%, 30% and 50% cooling period extensions.

The system thus dynamically sets the temperature difference based on the temperature measurements at the relevant timing points.

As a building heats up, the boiler cooling period extends as it takes longer for the heat within the building to decay, and the switching to a lower temperature threshold is based on detection of this longer cooling period. The system continues extending the cooling period until the preset limits are reached, for example the lowest temperature setting. However, the control of the system is based on the temperature levels rather than based on fixing time periods, which gives stability and ensures that temperatures cannot drop below required levels, for example a minimum stored hot water temperature.

The use of three settings is of course just an example. There may be more settings, and they may differ by 1 degree instead of 2 degrees. Similarly, the associated extended cooling periods can be different. They may also be settable to different values.

Figure 5B shows three fixed temperature thresholds of 70, 68 and 66 degrees (i.e. 2, 4 and 6 degrees below the lower threshold of 72 degrees). It shows how the first setting of 70 degrees provides a minimum extended cooling period, the second setting of 68 degrees provides a middle extended cooling period, and the third setting of 66 degrees provides a maximum extended cooling period.

If there is a decrease in demand on the boiler, cooling will be more gradual, so the lower temperature threshold will not be reached at the end of the extended time period (the additional 20%, then 30% then 50% in the example above). This signifies that the temperature is not dropping rapidly, so efficiency gains can be made by moving to a more extended cooling period. The temperature reached at the new extended time period is then monitored.

If there is an increase in demand on the boiler, cooling will be more rapid. A shorter extension period is then desired to make the boiler run more efficiently and to provide the required heat to the building sufficiently. If the lower threshold setting is too low, the building may cool too rapidly between firing cycles to meet the desired comfort levels, so the cooling period needs to be shortened.

Thus, if the lower temperature threshold is already reached at the time point being monitored, then the lower temperature threshold needs to be increased to a higher level, to reduce the extended cooling period.

The control is thus based on temperature detection, instead of setting time periods. The lower temperature threshold varies between the set of possible values dynamically based on the temperature reached at a given time after the cooling cycle begins. This is representative of the load and therefore is representative of whether extended cooling cycles are appropriate.

In this way, the system dynamically cycles between the different lower temperature thresholds based on the properties of the building, which influence the cooling cycle time.

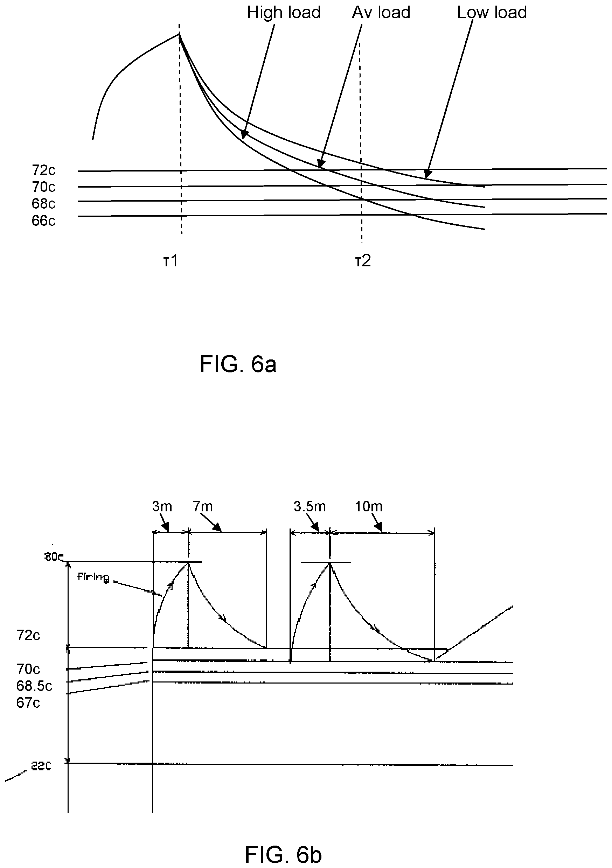

Figure 6a shows how the cooling curve varies in dependence on the building load, and shows the different thresholds.

Figure 6b shows a first cycle at the boiler thermostat setting of 72 degrees. This can be the last cycle of the calibration period. The burn cycle and cooling cycle times are measured, for example 3 minutes and 7 minutes. The 22 temperature line is the target room temperature.

The second cycle is for a first reduced lower setting of 70 degrees. The burn cycle has extended to 3.5m, and the cooling period has extended to 10m. If the time setting at which the assessment is made is for example at a threshold of 15% (7m +15% = 8.05m), a further reduction in the lower temperature threshold is possible, because the lower temperature has not been reached. The new temperature threshold is set and a new timing point for controlling the decision making for changing that temperature threshold.

The operation of the second known system thus comprises two main steps:

### 1 Start up and calibration procedure

The system measures the outgoing water temperature and registers the maximum and minimum temperature. This is carried out during normal boiler running. This provides a calibration of the temperature sensor of the system to the normal boiler operation.

The system also measures the durations of the firing and cooling cycles (i.e. time 0 to τ1 and τ1 to τ2).

In one possible system, the boiler thermostat settings are raised by a fixed amount, such as 1, 2 or 3 degrees. The maximum and minimum temperature points are then implemented by the system, with values that correspond to the previously set internal boiler values. In this way, the system controls the boiler based on the desired boiler settings, as previously set, whereas the internal boiler thermostat is effectively rendered out of circuit.

The system is then for controlling the boiler based on the monitored temperature and the maximum and minimum set points.

### 2. During running:

The system overrides and controls the boiler using its own maximum and minimum set points as described above.

The calibration approach described above requires the boiler settings to be altered, so that the system can provide control at the temperatures set on the boiler thermostat.

An alternative is for the system to provide upper and lower temperatures which are below the boiler settings, for example 1, 2 or 3 degrees below. The measured burn time and cool time will be almost identical because the temperature difference remains the same. This enables automatic calibration without needing the boiler settings to be altered as in the approach explained above. Instead, the system operates below the boiler set temperature settings, but this case just be one degree below, for example.

The system can then also perform monitoring functions. In particular, it can detect any change in the boiler temperature settings and automatically adapt to them. It does this by performing a new calibration operation (as explained above) periodically.

This can for example be every fixed number (e.g. 50) of burn/cool cycles. This calibration thus reveals any changed temperature settings on the boiler thermostat. However, it does not require any intervention to the boiler control circuitry or sensors.

In particular, this measuring cycle can be performed:
- when the system is powered up and switched on;
- when the system is switched on/off/on (so that a measuring cycle can be manually enforced);
- in response to a drop out of mains supply;
- periodically (such as every 50 Burn/Cool cycles), to detect an increase in boiler temperature setting. While the system is operational, it cannot detect any increase in the boiler temperature settings because the system is overriding any increased settings on the boiler. Thus, to detect increased temperature settings, a self-initiated measuring cycle (i.e. with the system function not operational) is performed followed by new maximum and minimum set points being defined, the fixed amount (such as 1, 2 or 3 degrees) below the monitored temperature value.

The system can, however, detect a decrease in the boiler temperature settings while it is active, i.e. without needing a calibration operation. When the maximum temperature is not achieved this is indicative of a decrease in the boiler temperature setting. In response to detecting a drop in the boiler's temperature settings, the system will then perform a new calibration measuring cycle and set the required new maximum and minimum set points the fixed amount below monitored temperatures to be in control of the boiler.

The system is typically of interest for 50kW to 800kW boilers.

In most respects, the system of the present invention may be operated in essentially the same way as the second known system described above.

In particular, the above-described temperature-based dynamic adjustment of the cooling cycle, in particular through adjustment of the lower temperature threshold, can also be applied in the present invention. The present invention differs only in the initial calibration stage in which the internal temperature thresholds defining the internal cooling cycle are determined. In the invention, this is performed using a combination of temperature measurements and drive signal detection measurements (e.g. detecting a power supply to the burner). This improves accuracy of the initial determination of the internal temperature threshold settings. Improvements in achievable efficiency gains are therefore possible.

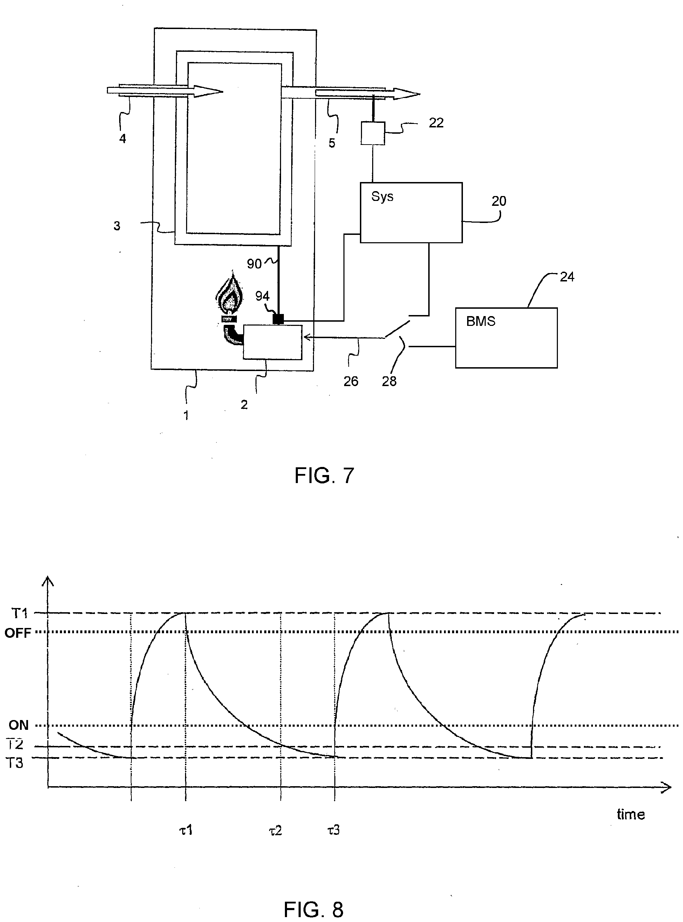

An example system in accordance with the invention is schematically depicted in Figure 7. The system is the same as the second known system described above and depicted in Figure 3 apart from the further provision of a drive signal detection means 94 for detecting supply of a drive signal to the burner 2 from an internal boiler control (not shown). The drive signal controls internal activation and deactivation of the burner.

The drive signal in this example is taken to be simply a power supply to the boiler from the internal boiler thermostat. When the drive signal (power supply) is switched on, the burner is activated, when the drive signal (power supply) is switched off, the burner is deactivated. Hence, when the internal thermostat lower temperature limit is reached, the thermostat switches on supply of the drive signal to burner, thereby activating the burner 2. When the internal thermostat upper temperature limit is reached, the thermostat switches off supply of the drive signal, thereby deactivating the burner 2.

The drive signal detection means 94 in this example comprises a signal sensing element 94 for sensing the drive signal in a drive signal supply line 90, e.g. power supply wire or cable. The signal sensing element may comprise an electrical connector which couples to an input terminal of the burner 2 to enable sensing of the drive signal.

The drive signal detection means 94 is operatively coupled with the system controller 20. The system analyses an output (e.g. a signal output) of the drive signal detection means 94 and from this identifies moments of activation and deactivation of the drive signal. Activation of the drive signal corresponds to activation of the burner and deactivation of the drive signal corresponds to deactivation of the burner. Activation of the drive signal means transition of the drive signal from inactive (off) to active (on). Deactivation of the drive signal means transition of the drive signal from active (on) to inactive (off).

Hence, by providing the drive signal detection means, internal activation and deactivation of the burner by the thermostat (e.g. by start and stop of power supply) can be directly detected without any time delay.

The system 20, like the system of Figure 3, comprises a flow temperature sensor 22 arranged to measure the temperature of hot water in an outflow 5 of the boiler tank 3. By measuring the temperature at the moment of detected activation of the burner (detected activation of the drive signal), the internal lower temperature limit is thereby accurately ascertained. By measuring the temperature at the moment of detected deactivation of the burner (detected deactivation of the drive signal), the internal upper temperature limit is thereby accurately ascertained.

These measurements of the internal upper and lower temperature limits, ascertained using the signal detection means 94 and the temperature sensor 22, are then used in the initial calibration process in which the normal boiler operation is assessed, and the initial extended cooling cycle is calibrated. For example, the calibration process described in point (1) above may be applied.

The system 20 of the invention may be operated in the same way as the second known system described above, except for the use of the above described improved procedure to ascertain the internal upper and lower temperature limits of the boiler. In particular, implementation of the delayed cooling cycle control can be the same as in any of the above described examples in relation to the second known system, including the temperature-based procedure for dynamically adjusting the lower temperature limit.

The lower temperature limit may be set so as to extend the cooling period compared to the cooling period provided by the internal settings. In examples, this may initially comprise setting the lower temperature limit a set number of degrees lower than the measured internal temperature limit, and then subsequently adjusting this upward or downward dynamically based on subsequent temperature measurements, as described above. This ensures that the cooling period is reduced when temperature of water is draining quickly (so more burn time is needed), but that cooling period is extended when water temperature is reducing only slowly. By extending the cooling cycle during times when water temperature loss is less rapid, efficiency of the boiler is improved, since the burn cycle is shorter.

The invention provides more accurate determination of the initial upper and lower temperature limits because times of burner activation and deactivation can be directly detected without time delay. This leads to improvements in the efficiency gains, because adjustment of the cooling cycle is based on more accurate assessments of the initial cooling cycle.

The improvements of the invention are illustrated by Figure 8. Figure 8 is a modified version of Figure 2 and shows operation of the delayed cycle control both under the previous known devices and the invention.

The graph illustrates the boiler temperature as a function of time. The peak temperature is T1. In the absence of delayed control, the minimum temperature is T2. In the previous known systems, it was assumed that the peak temperature T1 corresponded to the temperature at which the internal thermostat of the boiler switched the burner off (i.e. the internal upper temperature limit). It was also assumed that T2 was the temperature at which the thermostat switched the burner on, i.e. the internal lower temperature limit.

However, this is in reality inaccurate, since there is a time delay of up to 30 seconds or more between switching off the burner and this registering in the measured boiler (water) temperature. This is illustrated in Figure 8 by the fine dashed lines which schematically show the true OFF and ON times of the burner (i.e. the true internal upper and lower temperature limits). It can be seen that the time points corresponding to these true OFF and ON temperatures are significantly earlier than τ1 and τ2. Hence, the previous systems, by using the estimation of temperature maxima and minima as the internal upper and lower temperature limits, make an inaccurate estimation of the internal upper and lower limits and the initial cooling cycle.

The invention improves accuracy by measuring the moment of burner activation and deactivation directly, via burner drive signal, and sensing the boiler temperature at these times. These temperatures are calibrated as the internal lower and upper temperature limits.

In the example of Figure 7, the drive signal detection means 94 is a signal sensing element comprising an electrical connector for coupling to a terminal of the burner. The signal sensing means may simply be a wire for instance for electrically piggybacking on the electrical connection point between the drive signal supply line 90 and the burner 2.

In other examples the signal sensing element 94 may couple to a terminal of the drive signal supply line. The signal sensing element may electrically couple to the signal output terminal of the boiler thermostat, e.g. a wire connected the thermostat output.

The signal sensing element may more generally be any form of signal sensor for electrically or magnetically coupling with the drive signal to sense the drive signal. It may sense presence of the drive signal and/or it may sense magnitude of the drive signal. It may be for sensing a temporal pattern or waveform of the drive signal.

In further examples, the signal sensing element may comprise an inductive sensor for inductively coupling with the drive signal. The inductive sensor may for instance comprise an annular inductive loop for fitting around the drive signal supply line 90. It may be clippable around the drive signal line.

Although in the above example, the signal detection means is arranged to directly sense the drive signal, in other examples, the signal sensing element may be arranged to sense an auxiliary control signal, where the control signal controls supply of the drive signal to the burner. For instance the control signal may be a low voltage control signal of a control relay. The control signal may be a thermostat control signal.

The drive signal detection means need not comprise a signal sensing element. It may detect supply of the drive signal through other means, e.g. through software means.

The system controller 20 may be adapted to process a signal output of the drive signal detection means to identify a drive signal temporal pattern or waveform.

Although in the example above, the drive signal is a power supply to the heating device, in other examples, the drive signal may be a different kind of drive signal. It may be a control signal which triggers activation and deactivation of supply of power to the burner. In this case, it may be necessary to perform analysis of the detected drive signal at the system controller 20 to identify a waveform or signature of the drive signal. There may be a waveform associated with a burner activation signal and a waveform associated with a burner deactivation signal. By decoding the waveform in the drive signal detection means output, the controller can detect activation and deactivation of the burner.

For the avoidance of doubt, it is reiterated that any features of structure and operation of the second known boiler system described above may be utilized and applied mutatis mutandis in examples of the present invention, apart from the use of the additional signal detection means in initially determining the boiler internal upper and lower temperature limits.

Various modifications will be apparent to those skilled in the art without departing from the scope of the claims.

## Claims

1. A boiler control system for controlling a heating device in a boiler, comprising:
a delayed cycle controller for activating and deactivating said heating device based on an upper temperature threshold and a lower temperature threshold;
a temperature sensor for measuring a boiler temperature;
a drive signal detection means for detecting supply of a drive signal to the heating device;
an interrupt unit for interrupting a heating device enable signal thereby to implement the delayed cycle control of the delayed cycle controller, wherein
the delayed cycle controller is adapted to configure the delayed cycle control based on temperature measurements and an output of the drive signal detection means.

2. A system as claimed in claim 1, wherein the drive signal detection means comprises a signal sensing element for sensing the drive signal in a drive signal supply line, and
optionally wherein the drive signal detection means is for detecting a temporal pattern or waveform of the drive signal.

3. A system as claimed in any preceding claim, wherein the delayed cycle control is configured based on a detected activation of the drive signal and/or a detected deactivation of the drive signal.

4. A system as claimed in any preceding claim, wherein the delayed cycle controller is adapted to set one or both of the temperature thresholds based on temperature measurements taken at times determined based on detection of the drive signal, and
optionally wherein the temperature measurements are taken at times corresponding to detected activation and/or deactivation of the drive signal.

5. A system as claimed in any preceding claim, wherein the drive signal is a power supply to the heating device.

6. A system as claimed in any of claims 2 to 5, wherein the signal sensing element comprises an electrical connector for connection to a input terminal of the heating device or for connection to a terminal of a drive signal supply line.

7. A method of controlling a boiler heating device, comprising:
sensing a boiler temperature;
detecting supply of a drive signal to the boiler heating device;
activating and deactivating said heating device based on an upper temperature threshold and a lower temperature threshold to provide delayed cycle control, wherein the upper temperature threshold and lower temperature thresholds are below internal upper and lower thermostat control settings of the boiler, such that the internal upper thermostat control setting is not reached;
interrupting a heating device enable signal thereby to implement the delayed cycle control, wherein
the delayed cycle control is configured based on temperature measurements and on the detection of supply of the drive signal.

8. A method as claimed in claim 7, comprising performing a calibration operation to set one or both of the upper and lower temperature thresholds.

9. A method as claimed in claim 8, wherein the calibration operation comprises measuring a cooling time between a pre-calibration internal upper and lower temperature threshold.

10. A method as claimed in claim 8 or 9, wherein the upper temperature threshold is set equal to the pre-calibration internal upper temperature threshold, and after the calibration the internal upper temperature threshold is increased, and preferably wherein after the calibration the pre-calibration internal lower temperature threshold is increased.

11. A method as claimed in claim 8 or 9, wherein the upper temperature threshold is set below the pre-calibration internal upper temperature threshold, and preferably wherein the lower temperature threshold is set below the pre-calibration internal lower temperature threshold.

12. A method as claimed in any of claims 7 to 11, wherein the internal upper and/or lower temperature thresholds are respectively identified based on sensing the boiler temperature at a time corresponding to detected deactivation of the drive signal and/or detected activation of the drive signal.

13. A method as claimed in any of claims 9 to 12, wherein the upper and lower temperature thresholds are set such that a cooling time between the upper and lower thresholds is greater than the measured pre-calibration cooling time between the pre-calibration upper and lower temperature thresholds.

14. A method as claimed in any of claims 7 to 13, wherein the lower temperature threshold is controlled dynamically, and
optionally wherein the lower temperature threshold is set to one of a fixed set of temperatures.

15. A method as claimed in claim 14, wherein the lower temperature threshold is selected based on a temperature measurement at a fixed point in time after the upper temperature threshold is reached.
